# FASCICULE DE BREVET EUROPEEN

(11) **EP 3 498 539 B1**
(45) Date de publication et mention de la délivrance du brevet: **12.08.2020**
(21) Numéro de dépôt: 18211677.2
(22) Date de dépôt: 11.12.2018
(51) Int. Cl.: B60R 13/02

(54) **ÉLÉMENT DE TOIT POUR RIGIDIFIER LE TOIT D'UN VÉHICULE**
DACHELEMENT ZUR VERSTEIFUNG EINES FAHRZEUGDACHS
ROOF ELEMENT FOR STIFFENING A VEHICLE ROOF

(30) Priorité: 12.12.2017 FR 1762009
(43) Date de publication de la demande: 19.06.2019
(73) Titulaire: ADHEX TECHNOLOGIES, 21300 Chenôve (FR)
(72) Inventeur: DURAND, Hervé, 21000 DIJON (FR); JACSON, Vincent, 21600 LONGVIC (FR); ODILLE, Quentin, 21170 VARANGES (FR)
(74) Mandataire: Gevers & Orès

(56) Documents cités:
- EP-A1- 0 826 555
- DE-A1- 2 704 529
- FR-A1- 3 012 105

## Description

### Domaine technique

La présente invention concerne un élément de toit et en particulier un panneau intérieur de plafond pour un toit de véhicule pour améliorer la rigidité dudit toit.

### Etat de la technique

Il est bien connu que, dans le domaine de l'automobile, les constructeurs cherchent à diminuer le poids total de leurs véhicules afin d'en réduire la consommation énergétique et d'en abaisser le coût de revient. Ces efforts d'allégement portent en priorité sur les pièces métalliques de carrosserie car elles contribuent significativement au poids total des véhicules.

En particulier, ces efforts d'allégement portent sur le pavillon de toit des véhicules dans la mesure où sa surface est grande et où il ne constitue pas une pièce structurante ou de sécurité en cas de chocs frontal ou latéral. Ainsi, la réduction permanente de l'épaisseur de la tôle métallique du pavillon de toit a conduit à fabriquer des pavillons de toit de moins en moins rigides, extrêmement souples et déformables. Les pavillons de toit présentent désormais une déformation systématique et visible à l'œil nu, cette déformation étant accentuée par la brillance et le glacis surfacique de la peinture appliquée sur l'extérieur des pavillons.

Par ailleurs, la réduction de l'épaisseur des pavillons de toit métalliques a également amplifié les phénomènes de résonances vibratoires du pavillon, engendrés pour l'essentiel par la transmission par voie « solidienne » de vibrations dues au roulage et au groupe moteur du véhicule.

Afin de remédier à ces inconvénients, on a déjà imaginé des dispositifs dits raidisseurs de toit permettant de limiter la déformation des pavillons de toit et de réduire les vibrations.

C'est le cas notamment de la demande de brevet français FR 2 299 964 qui décrit un procédé de fabrication de panneaux en forme à base de carton et de mousse. Le procédé consiste à asperger avec une solution d'élastomère, l'une des faces d'une plaque de carton et d'une plaque de mousse, à poser la face non aspergée de la plaque de mousse sur celle aspergée de la plaque de carton, à mettre en place sur la face aspergée de la mousse, le recouvrement de finition, à retourner le sandwich ainsi formé pour permettre dans l'opération suivante, l'aspersion de la face vierge de la plaque de carton avec la solution d'élastomère, à déposer sur cette face enduite des bandes ou une plaque de mousse et à mettre cet ensemble dans un moule dans lequel le panneau sera embouti à la forme désirée, et maintenu dans cette forme grâce à la polymérisation de la solution d'élastomère.

Ce type de panneau, outre le coût de fabrication trop élevé, ne procure pas une absorption suffisante des vibrations notamment.

On connait également le document DE 27 04 529 qui décrit un procédé de production d'un matériau de revêtement de paroi. Ledit matériau de revêtement de paroi est formé d'un substrat en carton ondulé, d'une couche tampon poreuse collée sur un côté du substrat et d'un revêtement en résine thermoplastique déposé sur la surface extérieure de la couche tampon. Les matériaux de départ sont placés dans une presse à chaud dans un agencement ordonné avec des matériaux adhésifs interposés et soumis à une mise en forme par pression entre les matrices mâles et femelles avec application de chaleur. Pendant l'opération de mise en forme, de l'air est aspiré de l'espace entre le substrat et la surface formée d'une matrice par des trous formés intentionnellement dans cette matrice. L'attraction résultante des matériaux empilés sur cette matrice facilite la mise en forme. L'aspiration peut être améliorée en formant des protubérances en forme de rainures le long du bord du panneau de revêtement sur la surface de la matrice en contact avec le substrat pour pénétrer dans la couche tampon et en comprimant la couche tampon et/ou le substrat le long du bord du panneau de revêtement. Ladite région marginale délimitée par la rainure est coupée au niveau de ladite rainure de sorte que le panneau ne comporte plus de rainure lors de la pose du panneau.

De la même manière que précédemment, ce type de panneau ne comporte pas de pièce amortissante de sorte qu'il ne procure pas une absorption suffisante des vibrations. Par ailleurs, le coût de fabrication de ce type de panneau est trop élevé.

De nombreuses autres solutions ont été imaginées. On connait notamment des éléments de toit, raidisseurs, décrits dans les demandes de brevet JP10071646, DE 19702581, JP8332904 et EP 1 298 034.

Tous ces éléments de toit présentent l'inconvénient d'être onéreux à fabriquer et/ou induisent un temps de montage trop long grevant le coût de fabrication du véhicule.

La solution la plus fréquemment mise en oeuvre à l'heure actuelle consiste à d'abord coller une ou plusieurs plaques dites IFF, selon l'acronyme de « Insonorisant Fusible en Feuille » sur la paroi intérieure du pavillon de toit, puis à rapporter, par collage superposé, un raidisseur en carton rigide sur le pavillon. Le collage du carton est réalisé par des adhésifs double face mousse épais permettant de résorber le jeu dimensionnel délimité par l'épaisseur des plaques IFF.

Malgré cette précaution, la limitation de la pression de la plaque IFF sur le pavillon est aléatoire et ne permet pas de garantir une absence totale de déformation du pavillon.

Par ailleurs, en raison d'un volume d'air confiné important entre le pavillon et le raidisseur en carton, les bruits de tambourinement des gouttes de pluie sur le pavillon sont amplifiés, l'espace d'air interstitiel agissant comme une caisse de résonance acoustique.

De plus, ce type de solution procure un surcoût substantiel en terme de main d'oeuvre et en temps d'occupation de la ligne de montage ce qui grève le coût de fabrication du véhicule. En effet, l'opérateur en bord de ligne de montage doit d'abord positionner précisément, puis coller les plaques IFF sur le pavillon de toit. Ensuite, il doit peler manuellement et individuellement les films protecteurs anti-adhérents de toutes les bandes d'adhésif double face préalablement collées sur le carton raidisseur. Il est bien connu que ces opérations d'amorçage, puis de décomplexage du film protecteur d'un adhésif double face mousse sont fastidieuses et délicates. Les risques inhérents à l'enlèvement d'un film protecteur d'une bande d'adhésif double face mousse sont le décollement local de la bande adhésive du carton, la déchirure partielle de la mousse et la pollution de l'adhésif.

Afin de remédier à ces inconvénients, on a déjà imaginé des éléments de toit à base de carton ondulé. C'est le cas notamment des demandes de brevet français FR 3 011 519 et FR 3 012 105 déposées par la demanderesse.

Le document FR 3 011 519 décrit un élément de toit, en particulier un panneau intérieur de plafond pour un toit de véhicule, pour améliorer la rigidité dudit toit comportant une pièce en carton ondulé et au moins une pièce apte à absorber les vibrations, ladite pièce amortissante étant solidaire de la pièce en carton ondulé. Ladite pièce est obtenue dans du carton ondulé à double cannelure dans lequel est formé au moins un creux, ladite pièce amortissante s'étendant dans ledit creux de telle sorte que la face supérieure de ladite pièce amortissante affleure la face supérieure de la pièce en carton ondulé. Afin d'assurer la fixation de l'élément de toit sur le pavillon de toit, la pièce en carton ondulé comporte une pluralité de bandes d'adhésif sensible à la pression déposées sur la face supérieure de ladite pièce en carton ondulé et sur la paroi de fond du creux recevant la pièce amortissante. Ladite pièce amortissante présente un grammage surfacique compris entre 4 et 15 Kg/m² et consiste en une plaque de masse lourde bitumeuse.

Le document FR 3 012 105 décrit également un panneau raidisseur pour panneau galbé en tôle. Ledit panneau raidisseur est obtenu dans du carton ondulé à double cannelure et comprend une série de découpes parallèles traversant partiellement l'épaisseur du panneau en carton depuis la face supérieure du panneau en carton et une série de bandes adhésives recouvrant respectivement lesdites découpes parallèles. Ces découpes parallèles permettent de conférer au panneau raidisseur une souplesse telle que ce dernier peut, lors de son application contre le panneau en tôle, s'adapter à la surface galbée de celui-ci sans créer de déformation.

Toutefois, ce type d'élément de toit est particulièrement difficile à réaliser en raison de la difficulté de procéder à la découpe à mi-chair du carton à double cannelure de sorte que de nombreuses pièces doivent être mises au rébus, grevant ainsi le coût de fabrication.

### Divulguation de l'invention

L'un des buts de l'invention est donc de remédier à au moins un de ces inconvénients en proposant un élément de toit de conception simple et moins onéreuse tout en procurant une limitation efficace des vibrations, des bruits de tambourinement des gouttes de pluie et des déformations, ainsi qu'un montage rapide et aisé.

A cet effet et conformément à l'invention, il est proposé un élément de toit, en particulier un panneau intérieur de plafond pour un toit de véhicule, pour améliorer la rigidité dudit toit comportant une pièce en carton ondulé, comprenant au moins une couverture supérieure, au moins une cannelure et une couverture inférieure, et au moins une pièce dite amortissante apte à absorber les vibrations, ladite pièce amortissante étant solidaire de la pièce en carton ondulé ; ledit élément de toit est remarquable en ce que la pièce en carton ondulé comporte au moins une ligne de prédécoupe et/ou de rainure pratiquée sur au moins une des faces de ladite pièce en carton ondulé afin de permettre un pliage plus aisé de l'élément de toit lors de la mise en place dudit élément de toit.

Ladite pièce en carton ondulé comporte une pluralité de lignes de prédécoupe et/ou de rainure longitudinales et/ou une pluralité de lignes de prédécoupe et/ou de rainure transversales.

De préférence, la ou les lignes de prédécoupe et/ou de rainure sont parallèles aux cannelures.

Par ailleurs, au moins deux lignes de prédécoupe et/ou de rainure sont séparées d'une distance sensiblement égale à la largeur des cannelures de la pièce en carton ondulé.

Chaque ligne de prédécoupe est constituée d'une série d'incisions pratiquées dans la couverture supérieure ou inférieure de la pièce en carton ondulé.

Lesdites incisions présentent une longueur comprise entre 1 et 20 mm et la distance entre deux incisions est comprise entre 1 et 20 mm.

Par ailleurs, chaque incision présente une forme rectiligne, circulaire ou ovoïde.

De plus, chaque ligne de rainure est obtenue par un rainage.

Chaque ligne de rainure présente une profondeur supérieure à l'épaisseur de la pièce en carton ondulé.

Selon une variante d'exécution, chaque ligne de rainure présente une profondeur inférieure à l'épaisseur de la pièce en carton ondulé.

Selon une autre variante d'exécution, ladite pièce en carton ondulé comporte au moins deux lignes de rainure opposée, une première ligne de rainure pratiquée depuis la couverture supérieure et une seconde ligne de rainure pratiquée depuis la couverture inférieure.

Chaque ligne de rainure présente une largeur inférieure ou égale à la largeur des cannelures.

Par ailleurs, la pièce en carton ondulé comporte une pluralité de bandes d'adhésif sensible à la pression déposées sur la face supérieure de ladite pièce en carton ondulé et sur la paroi de fond du creux recevant la pièce amortissante.

De plus, la face supérieure de la pièce amortissante comporte une couche d'un adhésif sensible à la pression.

Ladite pièce amortissante présente un grammage surfacique compris entre 4 et 15 Kg/m².

Ladite pièce amortissante consiste en une plaque de masse lourde bitumeuse qui comporte, de préférence, des charges minérales et/ou des charges magnétiques.

### Brève description des dessins

D'autres avantages et caractéristiques ressortiront mieux de la description qui va suivre de plusieurs variantes d'exécution, données à titre d'exemples non limitatifs, de l'élément de toit conforme à l'invention, en référence aux dessins annexés sur lesquels :
- la figure 1 est une vue en perspective d'un élément de toit suivant l'invention positionné sur un pavillon de toit d'un véhicule automobile,
- la figure 2 est une vue de dessus d'un élément de toit conforme à l'invention,
- la figure 3 est une vue en coupe transversale schématique de l'élément de toit suivant l'invention représenté sur la figure 2,
- la figure 4 est une vue en coupe d'une bande d'adhésif de l'élément de toit suivant l'invention représenté sur la figure 3,
- les figures 5 et 6 sont des vues en coupe transversale schématiques des différentes étapes de formation des lignes de rainure de l'élément de toit suivant l'invention,
- les figures 7 et 8 sont des vues en coupe transversale schématiques des différentes étapes de formation des lignes de rainure d'une variante d'exécution de l'élément de toit suivant l'invention.

### Mode de réalisation de l'invention

Par souci de clarté, dans la suite de la description, les mêmes éléments ont été désignés par les mêmes références aux différentes figures. De plus, les diverses vues ne sont pas nécessairement tracées à l'échelle.

On décrira ci-après un élément de toit d'un véhicule automobile et plus particulièrement un panneau intérieur de plafond de voiture ; toutefois, il est bien évident que ledit élément de toit suivant l'invention pourra être utilisé pour tout type de véhicule sans pour autant sortir du cadre de l'invention.

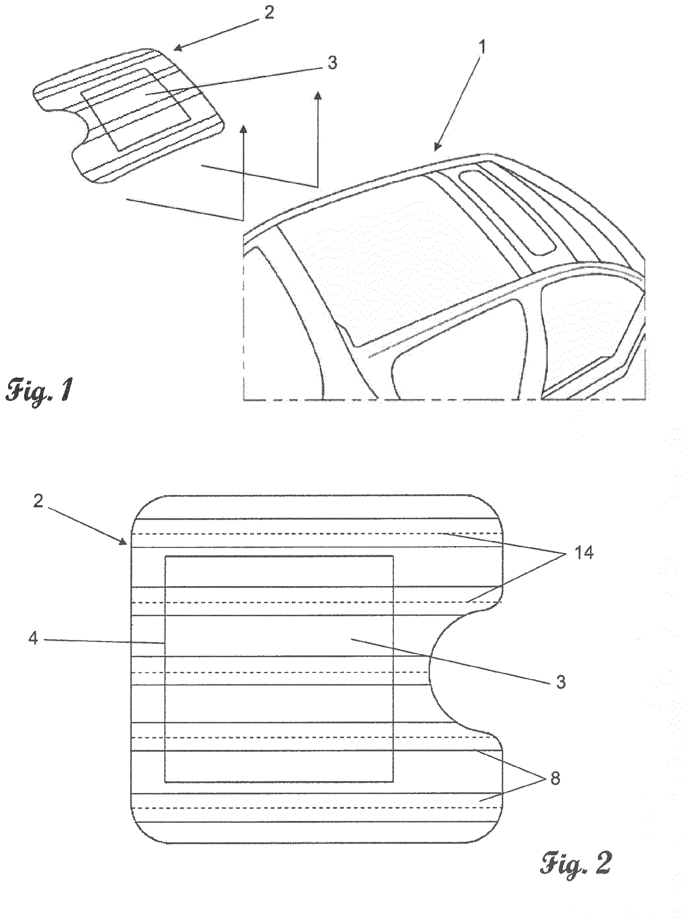

En référence à la figure 1, l'élément de toit suivant l'invention, pour améliorer la rigidité du pavillon de toit d'un véhicule (1) comporte une pièce sensiblement rectangulaire en carton ondulé (2) et une pièce dite amortissante (3), apte à absorber les vibrations et solidaire de la pièce rectangulaire en carton ondulé (2).

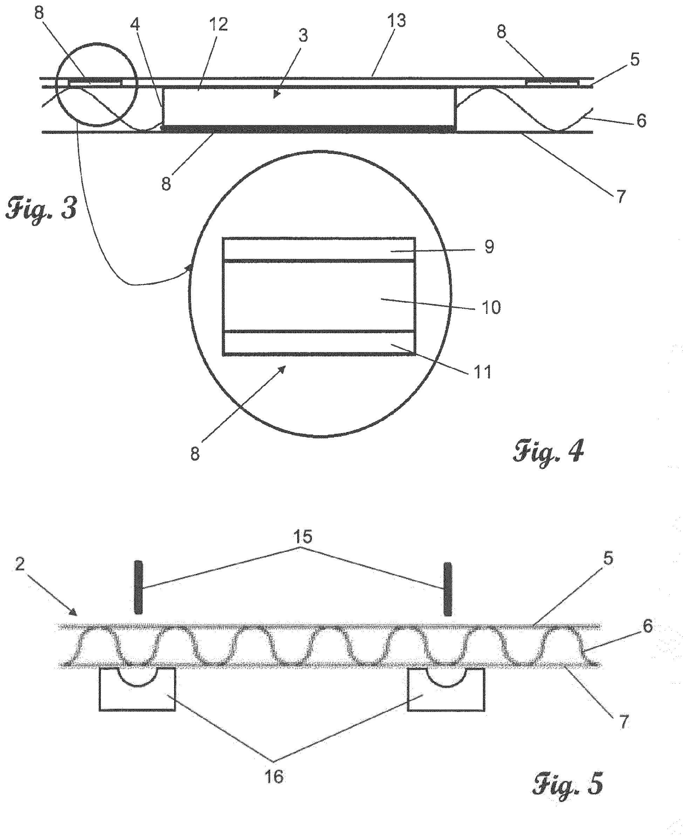

En référence aux figures 2 et 3, ladite pièce sensiblement rectangulaire en carton ondulé (2) est obtenue dans du carton ondulé à simple cannelure comprenant une couverture supérieure (5), une cannelure (6) et une couverture inférieure (7), et dans lequel est formé au moins un creux (4), ladite pièce amortissante (3) s'étendant dans ledit creux (4) de telle sorte que, de préférence, la face supérieure de ladite pièce amortissante (3) affleure la face supérieure de la pièce rectangulaire en carton ondulé (2).

On notera que dans cet exemple particulier de réalisation, l'élément de toit est constitué d'une pièce en carton ondulé de forme sensiblement rectangulaire et d'une unique pièce amortissante également de forme rectangulaire ; toutefois, il est bien évident que la pièce en carton ondulé pourra présenter une forme quelconque et que l'élément de toit pourra comporter une ou plusieurs pièces amortissantes de forme quelconque sans pour autant sortir du cadre de l'invention.

Par exemple, ledit carton ondulé à simple cannelure présente une épaisseur comprise entre 2 et 6 mm, un coefficient d'ondulation compris entre 1,35 et 1,70, 120 à 180 cannelures au mètre et la somme des grammages de la couverture inférieure (7) et de la couverture supérieure (5) est comprise entre 200 et 635 g/m2.

Par ailleurs, en référence à la figure 3, ledit creux (4) est formé dans la pièce en carton ondulé (2) par une découpe dans la couverture supérieure (5) et par un écrasement de la partie découpée jusqu'à la couverture inférieure (7). La découpe dans la couverture supérieure (5) de la pièce en carton ondulé (2) est obtenue par tout moyen de découpe approprié bien connu de l'homme du métier.

Afin d'assurer la fixation de l'élément de toit sur le pavillon de toit, la pièce en carton ondulé (2) comporte une pluralité de bandes d'adhésif sensible à la pression (8) déposées sur la face supérieure de ladite pièce en carton ondulé (2), c'est-à-dire sur la couverture supérieure (5), et sur la paroi de fond du creux (4) recevant la pièce amortissante (3).

En référence à la figure 4, les bandes d'adhésif sensible à la pression (8) consistent dans des bandes d'adhésif comportant une première couche d'adhésif sensible à la pression (9), une couche en mousse (10) et une seconde couche d'adhésif sensible à la pression (11). Ladite couche en mousse (10) présente de préférence une épaisseur comprise entre 500 et 1300 µm et les couches d'adhésif sensible à la pression (9) et (11) présentent une épaisseur comprise entre 50 et 100 µm. Lesdites couches d'adhésif sensible à la pression (9) et (11) sont obtenues dans un adhésif acrylique à base solvant auto-réticulant. De plus, la couche de mousse présente une densité comprise entre 40 Kg/m³ et 160 Kg/m³ et est obtenue dans de la mousse de Polyethylène (PE) à cellules fermées réticulée physique. Par exemple, les bandes d'adhésif (8) sensible à la pression sont constituées d'une mousse de PolyEthylène réticulé à cellules fermées, noire, densité 143 Kg/m³, épaisseur 0.8 mm, comprenant un protecteur film ou papier siliconé 2 faces différenciées, et dont les masses adhésives sur chaque face de la mousse sont constituées de masses adhésives acryliques solvant auto-réticulables fournies par la société CYTEC sous la référence Gelva GMS 2835, 85 g/m2, après traitement Corona des 2 faces de la mousse et enduction par transfert de la masse adhésive. Alternativement, les bandes d'adhésif (8) sensible à la pression sont constituées d'une mousse de Polyéthylène réticulé à cellules fermées, blanche, densité 55 Kg/m³, épaisseur 1mm, comprenant un protecteur film ou papier siliconé 2 faces différenciées, et dont les masses adhésives sur chaque face de la mousse sont constituées de masses adhésives acryliques solvant auto-réticulables fournies par la société CYTEC sous la référence Gelva GMS 2835, 80 g/m² sur chaque face, après traitement Corona des 2 faces de la mousse et enduction par transfert de la masse adhésive.

Par ailleurs, en référence à la figure 3, la face supérieure de la pièce amortissante (3) comporte une couche d'un adhésif sensible à la pression (12). De préférence, la pièce amortissante présente un grammage surfacique compris entre 6 et 15 Kg/m² et consiste en une plaque de masse lourde bitumeuse dite IFF selon l'acronyme de « Insonorisant Fusible en Feuille », qui peut avantageusement comporter des charges minérales et/ou des charges magnétiques.

Par ailleurs, en référence à la figure 3, l'élément de toit suivant l'invention comporte un film protecteur (13) coiffant les bandes d'adhésif sensible à la pression (8) déposées sur la face supérieure de la pièce en carton ondulé (2) et la couche d'adhésif sensible à la pression (12) de la face supérieure de la pièce amortissante (3). Ledit film protecteur (13) consiste dans une feuille de papier siliconée ou dans tout autre film protecteur équivalent bien connu de l'homme du métier. On notera que l'élément de toit suivant l'invention ne comporte ainsi qu'un seul film protecteur (13) à retirer préalablement à la pose de l'élément de toit ce qui facilite sa pose et réduit la pollution du lieu de montage.

Afin de permettre de s'adapter à la surface galbée du pavillon de toit du véhicule sans créer de déformation susceptible d'affecter le collage de l'élément de toit, la pièce en carton ondulé (2) comporte avantageusement des lignes dites de rainure (14) pratiquée sur la face supérieure de ladite pièce en carton ondulé (2), i.e. depuis la couverture supérieure (5) de cette dernière. Dans l'exemple particulier de réalisation représenté sur la figure 3, la pièce en carton ondulé (2) comporte une pluralité de lignes de rainure (14) longitudinales régulièrement espacées et recouvertes par les bandes d'adhésif sensible à la pression (8). Toutefois, il est bien évident que les bandes d'adhésif sensible à la pression (8) pourront être déposées sur la face supérieure de la pièce en carton ondulé (2) sans coiffer les lignes de rainures (14) sans pour autant sortir du cadre de l'invention. Par ailleurs, la pièce en carton ondulé (2) pourra comprendre des lignes de rainure (14) longitudinales et/ou transversales afin de s'adapter le plus précisément au galbe du pavillon de toit.

De préférence, les lignes de rainure (14) sont parallèles aux cannelures (6) de la pièce en carton ondulé (2) et sont obtenues par un rainage, comme il sera détaillé plus loin, au moyen d'un filet raineur, constitué d'une mince lame d'acier à fil arrondi, et d'une gouttière positionnée du côté opposé du filet raineur et communément appelé « contre-partie ». De plus, chaque ligne de rainure présente une largeur inférieure ou égale à la largeur des cannelures (6) et une profondeur supérieure à l'épaisseur de la pièce en carton ondulé (2).

Il est bien évident que chaque ligne de rainure (14) pourra présenter une profondeur inférieure à l'épaisseur de la pièce en carton ondulé (2) sans pour autant sortir du cadre de l'invention.

Selon une variante d'exécution, la pièce en carton ondulé (2) comporte au moins deux lignes de rainure (14) opposées, une première ligne de rainure (14) pratiquée depuis la couverture supérieure (5) et une seconde ligne de rainure (14) pratiquée dans la couverture inférieure (7), chaque ligne de rainure présentant une profondeur inférieure à l'épaisseur de la pièce en carton ondulé (2).

Selon une autre variante d'exécution, non représentée sur les figures, la pièce en carton ondulé (2) comporte des lignes de rainure (14) dites supérieures pratiquées depuis la couverture supérieure (5) et des lignes de rainure (14) dites inférieures pratiquées dans la couverture inférieure (7), les lignes de rainure (14) supérieures et inférieures étant en quinconce et chaque ligne de rainure (14) présentant une profondeur soit inférieure soit supérieure ou égale à l'épaisseur de la pièce en carton ondulé (2).

Selon une autre variante d'exécution, non représentée sur les figures, la pièce en carton ondulé (2) comporte des groupement de lignes de rainure (14) constitué d'au moins deux lignes de rainure (14) parallèles séparées d'une distance sensiblement égale à la largeur des cannelures (6) de la pièce en carton ondulé (2), lesdites lignes de rainure (14) pouvant être pratiquées dans la couverture supérieure (5) et/ou dans la couverture inférieure (7).

Selon une dernière variante d'exécution, tout ou partie des lignes de rainure (14) peut être substitué par des lignes de prédécoupe, chaque ligne de prédécoupe étant constituée d'une série d'incisions pratiquées dans la couverture supérieure (5) ou inférieure (7) de la pièce en carton ondulé (2). Lesdites incisions présentent une longueur comprise entre 1 et 20 mm et la distance entre deux incisions est comprise entre 1 et 20 mm, chaque incision présentant une forme rectiligne, circulaire ou ovoïde.

Enfin, il est bien évident que la pièce en carton ondulé (2) pourra être obtenue dans du carton simple cannelure ou double cannelure ou triple cannelure sans pour autant sortir du cadre de l'invention. Par exemple, le carton simple cannelure pourra consister dans du carton fourni par la société I Paper sous la référence C680 et présentant un grammage surfacique de 570 g/m² et le carton double cannelure pourra consister dans du carton fourni par la société I Paper sous la référence BC580 et présentant un grammage surfacique de 1030 g/m2.

On expliquera maintenant le procédé de fabrication de l'élément de toit suivant l'invention.

En référence aux figures 3 et 4, à partir d'une pièce de carton ondulé (2) à simple cannelure préalablement découpée à la forme requise, en l'espèce une forme sensiblement rectangulaire, on procède à la découpe d'une forme centrale à partir de moyens de découpe adaptés à travers la couverture supérieure (5). La forme ainsi découpée est alors écrasée jusqu'à la couverture inférieure (7) pour former un creux (4) dans la pièce de carton ondulé (2). Une pluralité de bandes d'adhésif sensible à la pression (8) est déposée sur la face supérieure de ladite pièce en carton ondulé (2), c'est-à-dire sur la couverture supérieure (5), et sur la paroi de fond du creux (4). Ensuite, la pièce amortissante (3) est positionnée dans le creux (4) et le film protecteur (13) est déposé pour coiffer les bandes d'adhésif sensible à la pression (8) déposées sur la face supérieure de la pièce en carton ondulé (2) et la couche d'adhésif sensible à la pression (12) de la face supérieure de la pièce amortissante (3).

On notera que les bandes d'adhésif (8) à double faces sont posées avec un film protecteur protégeant la face supérieure desdites bandes, puis le film protecteur de chacune desdites bandes d'adhésif (8) à double face est retiré préalablement au dépôt du film protecteur (13) couvrant la totalité de la surface de la pièce en carton ondulé (2).

Il va de soi que les bandes d'adhésif (8) à double face pourront être déposées sans leur film protecteur par tout procédé de transfert bien connu de l'homme du métier, permettant de retirer le film protecteur lors de la pose, sans pour autant sortir du cadre de l'invention.

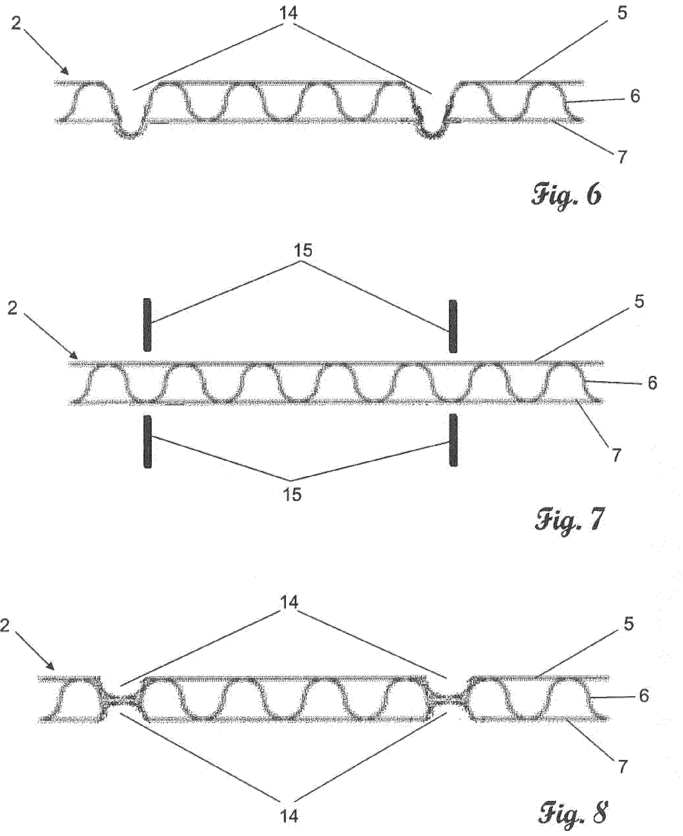

Selon une première variante d'exécution, préalablement au dépôt des bandes d'adhésif sensible à la pression (8) et/ou à la formation du (4), en référence à la figure 5, des lignes de rainure (14) parallèles aux cannelures (6) de la pièce en carton ondulé (2) sont obtenues par un rainage au moyen de filets raineur (15), constitués d'une mince lame d'acier à fil arrondi, et de gouttières (16) positionnées du côté opposé des filets raineur (14), au droit de ces derniers. En poussant les filets raineur (15) dans les gouttières (16), des lignes de rainure (14) de profondeur supérieure à l'épaisseur de la pièce en carton ondulé (2) sont formées (figure 6). On notera que l'homme du métier n'aura pas de difficultés à adapter la largeur du filet raineur (15), la largeur de la gouttière (16) ainsi que la pression du filet raineur (15) en fonction des propriétés de la pièce en carton ondulé (2) et plus particulièrement en fonction du type de carton (simple, double ou triple cannelure), de son grammage, de la largeur des cannelures, etc.

Selon une variante d'exécution, en référence à la figure 7, préalablement au dépôt des bandes d'adhésif sensible à la pression (8) et/ou à la formation du (4), des lignes de rainure (14) parallèles aux cannelures (6) de la pièce en carton ondulé (2) sont obtenues par un rainage au moyen de filets raineur (15) s'étendant par paire de chaque côté de ladite pièce en carton ondulé afin de former des lignes de rainure (14) opposées, une première ligne de rainure (14) pratiquée depuis la couverture supérieure (5) et une seconde ligne de rainure (14) pratiquée dans la couverture inférieure (7), chaque ligne de rainure présentant une profondeur inférieure à l'épaisseur de la pièce en carton ondulé (2) (figure 8).

Enfin, il est bien évident que les exemples que l'on vient de donner ne sont que des illustrations particulières en aucun cas limitatives quant aux domaines d'application de l'invention.

## Revendications

1. Elément de toit, en particulier panneau intérieur de plafond pour un toit de véhicule, pour améliorer la rigidité dudit toit comportant une pièce en carton ondulé (2), comprenant au moins une couverture supérieure (5), au moins une cannelure (6) et une couverture inférieure (7), et au moins une pièce dite amortissante (3) apte à absorber les vibrations, ladite pièce amortissante (3) étant solidaire de la pièce en carton ondulé (2), ***caractérisé* en ce que** la pièce en carton ondulé (2) comporte au moins une ligne de prédécoupe et/ou de rainure (14) pratiquée sur au moins une des faces de ladite pièce en carton ondulé (2) afin de permettre un pliage plus aisé de l'élément de toit lors de la mise en place dudit élément de toit.

2. Elément de toit suivant la revendication 1 ***caractérisé* en ce que** la pièce en carton ondulé (2) comporte une pluralité de lignes de prédécoupe et/ou de rainure (14) longitudinales.

3. Elément de toit suivant l'une quelconque des revendications 1 ou 2 ***caractérisé* en ce que** la pièce en carton ondulé comporte une pluralité de lignes de prédécoupe et/ou de rainure (14) transversales.

4. Elément de toit suivant l'une quelconque des revendications 1 à 3 ***caractérisé* en ce que** la ou les lignes de prédécoupe et/ou de rainure (14) sont parallèles aux cannelures.

5. Elément de toit suivant l'une quelconque des revendications 1 à 4 ***caractérisé* en ce qu'**au moins deux lignes de prédécoupe et/ou de rainure (14) sont séparées d'une distance sensiblement égale à la largeur des cannelures (6) de la pièce en carton ondulé (2).

6. Elément de toit suivant l'une quelconque des revendications 1 à 5 ***caractérisé* en ce que** chaque ligne de prédécoupe (14) est constituée d'une série d'incisions pratiquées dans la couverture supérieure (5) ou inférieure (7) de la pièce en carton ondulé (2).

7. Elément de toit suivant la revendication 6 ***caractérisé* en ce que** lesdites incisions présentent une longueur comprise entre 1 et 20 mm et la distance entre deux incisions est comprise entre 1 et 20 mm.

8. Elément de toit suivant l'une quelconque des revendications 6 ou 7 ***caractérisé* en ce que** chaque incision présente une forme rectiligne, circulaire ou ovoïde.

9. Elément de toit suivant l'une quelconque des revendications 1 à 5 ***caractérisé* en ce que** chaque ligne de rainure (14) est obtenue par un rainage.

10. Elément de toit suivant la revendication 9 ***caractérisé* en ce que** chaque ligne de rainure (14) présente une profondeur supérieure à l'épaisseur de la pièce en carton ondulé (2).

11. Elément de toit suivant la revendication 9 ***caractérisé* en ce que** chaque ligne de rainure (14) présente une profondeur inférieure à l'épaisseur de la pièce en carton ondulé (2).

12. Elément de toit suivant la revendication 11 ***caractérisé* en ce que** ladite pièce en carton ondulé (2) comporte au moins deux lignes de rainure (14) opposée, une première ligne de rainure (14) pratiquée depuis la couverture supérieure (5) et une seconde ligne de rainure (14) pratiquée depuis la couverture inférieure (7).

13. Elément de toit suivant l'une quelconque des revendications 9 à 12 ***caractérisé* en ce que** chaque ligne de rainure (14) présente une largeur inférieure ou égale à la largeur des cannelures (6).

14. Elément de toit suivant l'une quelconque des revendications 1 à 13 ***caractérisé* en ce que** la pièce en carton ondulé (2) comporte une pluralité de bandes d'adhésif sensible à la pression (8) déposées sur la face supérieure de ladite pièce en carton ondulé (2) et sur la paroi de fond du creux (4) recevant la pièce amortissante.

15. Elément de toit suivant l'une quelconque des revendications 1 à 14 ***caractérisé* en ce que** la face supérieure de la pièce amortissante (3) comporte une couche d'un adhésif sensible à la pression.

## Patentansprüche

1. Dachelement, insbesondere Deckeninnenplatte für ein Fahrzeugdach, zum Verbessern der Steifigkeit des Dachs, das ein Wellpappeteil (2) umfasst, das mindestens eine obere Abdeckung (5), mindestens eine Rillung (6) und eine untere Abdeckung (7) umfasst, und mindestens ein sogenanntes Dämpfungsteil (3), das imstande ist, die Schwingungen zu absorbieren, wobei das Dämpfungsteil (3) fest mit dem Wellpappeteil (2) verbunden ist, **dadurch *gekennzeichnet,* dass** das Wellpappeteil (2) mindestens eine Vorschneid- und/oder Nutlinie (14) umfasst, die auf mindestens einer der Seiten des Wellpappeteils (2) angelegt ist, um ein bequemeres Falten des Dachelements bei dem Anbringen des Dachelements zu erlauben.

2. Dachelement nach Anspruch 1, **dadurch *gekennzeichnet,* dass** das Wellpappeteil (2) eine Vielzahl länglicher Vorschneid- und/oder Nutlinien (14) umfasst.

3. Dachelement nach einem der Ansprüche 1 oder 2, **dadurch *gekennzeichnet,* dass** das Wellpappeteil eine Vielzahl von querlaufenden Vorschneid und/oder Nutlinien (14) umfasst.

4. Dachelement nach einem der Ansprüche 1 bis 3, **dadurch gekennzeichnet, dass** die Vorschneid- und/oder Nutlinie (14) zu den Rillungen parallel sind.

5. Dachelement nach einem der Ansprüche 1 bis 4, **dadurch *gekennzeichnet,* dass** mindestens zwei Vorschneid- und/oder Nutlinien (14) um einen Abstand getrennt sind, der im Wesentlichen gleich der Breite der Rillungen (6) des Wellpappeteils (2) ist.

6. Dachelement nach einem der Ansprüche 1 bis 5, **dadurch *gekennzeichnet,* dass** jede Vorschneidlinie (14) aus einer Reihe von Einschnitten besteht, die in der oberen (5) oder unteren (7) Abdeckung des Wellpappeteils (2) angelegt sind.

7. Dachelement nach Anspruch 6, **dadurch *gekennzeichnet,* dass** die Einschnitte eine Länge zwischen 1 und 20 mm aufweisen, und der Abstand zwischen zwei Einschnitten zwischen 1 und 20 mm liegt.

8. Dachelement nach einem der Ansprüche 6 oder 7, **dadurch *gekennzeichnet,* dass** jeder Einschnitt eine geradlinige, kreisförmige oder ovale Form aufweist.

9. Dachelement nach einem der Ansprüche 1 bis 5, **dadurch *gekennzeichnet,* dass** jede Nutlinie (14) durch ein Rillen erhalten wird.

10. Dachelement nach Anspruch 9, **dadurch *gekennzeichnet,* dass** jede Nutlinie (14) eine Tiefe größer als die Stärke des Wellpappeteils (2) aufweist.

11. Dachelement nach Anspruch 9, **dadurch *gekennzeichnet,* dass** jede Nutlinie (14) eine Tiefe kleiner als die Stärke des Wellpappeteils (2) aufweist.

12. Dachelement nach Anspruch 11, **dadurch *gekennzeichnet,* dass** das Wellpappeteil (2) mindestens zwei gegenüberliegende Nutlinien (14) umfasst, eine erste Nutlinie (14), die ausgehend von der oberen Abdeckung (5) angelegt ist, und eine zweite Nutlinie (14), die ausgehend von der unteren Abdeckung (7) angelegt ist.

13. Dachelement nach einem der Ansprüche 9 bis 12, **dadurch *gekennzeichnet,* dass** jede Nutlinie (14) eine Breite kleiner oder gleich der Breite der Rillungen (6) aufweist.

14. Dachelement nach einem der Ansprüche 1 bis 13, **dadurch *gekennzeichnet,* dass** das Wellpappeteil (2) eine Vielzahl druckempfindlicher Klebebänder (8) umfasst, die auf der Oberseite des Wellpappeteils (2) und auf der Bodenwand der Vertiefung (4), die das Dämpfungsteil aufnimmt, aufgebracht sind.

15. Dachelement nach einem der Ansprüche 1 bis 14, **dadurch *gekennzeichnet,* dass** die Oberseite des Dämpfungsteils (3) eine druckempfindliche Klebstoffschicht umfasst.

## Claims

1. Roof element, in particular an interior ceiling board for the roof of a vehicle, to improve the rigidity of said roof comprising a piece of corrugated board (2), comprising at least one top cover (5), at least one flute (6) and one bottom cover (7), and at least one shock-absorbing piece (3) capable of absorbing vibrations, said shock-absorbing piece (3) being attached to the piece of corrugated board (2), ***characterised* in that** the piece of corrugated board (2) comprises at least one pre-cut line and/or groove (14) produced on at least one of the sides of said piece of corrugated board (2) in order to allow easier folding of the roof element during installation of said roof element.

2. Roof element according to claim 1 ***characterised* in that** the piece of corrugated board (2) comprises a plurality of longitudinal pre-cut lines and/or grooves (14).

3. Roof element according to any one of the claims 1 or 2 ***characterised* in that** the piece of corrugated board comprises a plurality of transversal pre-cut lines and/or grooves (14).

4. Roof element according to any one of claims 1 to 3 ***characterised* in that** the pre-cut line(s) and/or groove(s) (14) is/are parallel to the grooves.

5. Roof element according to any one of claims 1 to 4 ***characterised* in that** at least two pre-cut lines and/or grooves (14) are separated by a distance approximately equal to the width of the flutes (6) of the piece of corrugated board (2).

6. Roof element according to any one of claims 1 to 5 ***characterised* in that** each pre-cut line (14) consists of a series of incisions in the top (5) or bottom (7) cover of the piece of corrugated board (2).

7. Roof element according to claim 6 ***characterised* in that** the said incisions have a length of between 1 and 20 mm and the distance between two incisions is between 1 and 20 mm.

8. Roof element according to any one of claims 6 or 7 ***characterised* in that** each incision has a rectilinear, circular or ovoid form.

9. Roof element according to any one of claims 1 to 5 ***characterised* in that** each groove line (14) is obtained by creasing.

10. Roof element according to claim 9 ***characterised* in that** each groove line (14) has a depth greater than the thickness of the piece of corrugated board (2).

11. Roof element according to claim 9 ***characterised* in that** each groove line (14) has a depth less than the thickness of the piece of corrugated board (2).

12. Roof element according to claim 11 ***characterised* in that** said piece of corrugated board (2) comprises at least two opposed groove lines (14), a first groove line (14) made from the top cover (5) and a second groove line (14) made from the bottom cover (7).

13. Roof element according to any one of claims 9 to 12 ***characterised* in that** each groove line (14) has a width less than or equal to the width of the flutes (6).

14. Roof element according to any one of claims 1 to 13 ***characterised* in that** the piece of corrugated board (2) comprises a plurality of pressure-sensitive adhesive bands (8) on the top side of said piece of corrugated board (2) and on the bottom wall of the depression (4) receiving the shock-absorbing piece.

15. Roof element according to any one of claims 1 to 14 ***characterised* in that** the top side of the shock-absorbing piece (3) comprises a layer of pressure-sensitive adhesive.
